(19) Europäisches Patentamt / European Patent Office / Office européen des brevets

(11) **EP 2 869 381 A1**

(12) **EUROPEAN PATENT APPLICATION**

(43) Date of publication:
06.05.2015 Bulletin 2015/19

(51) Int Cl.:
*H01M 8/06* (2006.01) *H01M 4/90* (2006.01)

(21) Application number: 13191273.5

(22) Date of filing: 01.11.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Danmarks Tekniske Universitet**
**2800 Lyngby (DK)**

(72) Inventors:
• **Bonaccorso, Alfredo Damiano**
  **4000 Roskilde (DK)**

• **Hagen, Anke**
  **2800 Lyngby (DK)**
• **Hendriksen, Peter Vang**
  **3400 Hillerød (DK)**
• **Ramousse, Severine**
  **4000 Roskilde (DK)**
• **Kaiser, Andreas**
  **4000 Roskilde (DK)**
• **Søgaard, Martin**
  **5750 Ringe (DK)**

(74) Representative: **Plougmann & Vingtoft A/S**
**Rued Langgaards Vej 8**
**2300 Copenhagen S (DK)**

(54) **An integrated catalytic steam reforming fuel cell electrode**

(57) The invention relates to the production of a steam reforming- fuel cell system in which a catalytic steam reforming layer is directly integrated into a fuel cell device by being co-sintered with the fuel cell anode. The system is thus able to cogenerate $H_2$ and electricity from glycerol by an electro-catalytic process.

The reforming layer may be composed of a combination of two metals, e.g. Mo-Ti, Cu-Ti, Mo-Cu, Mo-W mixed within gadolinia doped ceria with the advantage of being able to tolerate large amount of sulphur often contained in sources of glycerol produced from bio-mass.

The invention relates also to a system having a specific geometry, e. g. a tubular geometry.

The invention also relates to a method of operating the system where the control of the injection, e.g. by employing a pulsed injection, with the advantage of regenerating the catalytic reforming layer without the need of shutting down the system.

FIG. 1

EP 2 869 381 A1

**Description**

FIELD OF THE INVENTION

The present invention relates to an electrode for a catalytic reforming fuel cell or oxygen membrane and a fuel cell comprising the electrode or the oxygen membrane, a stack of the fuel cells and a method to operate the fuel cell.
The present invention relates also to an oxygen permeation membrane comprising the electrode.

BACKGROUND OF THE INVENTION

The esterification process converts oil or fat into biodiesel and also produces glycerol as a by-product.
Bio-diesel production, in particular in the EU, is increasing drastically according to the directive of the EU Energy and Climate Change Package (CCP), which obliges member states to add 10% bio-diesel to mineral fuel by 2020.This directive makes the EU the largest producer of bio-diesel in the world. This increase in biodiesel production will result in an increase of glycerol production, which is difficult to be used. For example, it needs to be purified from sulphur compounds and potassium catalysts used during the esterification reaction, if it is to be used in the pharmaceutical or food industry.
Furthermore, it cannot directly be used as fuel because it produces toxic substances, such as acryline. Nevertheless, glycerol could be a promising clean source of energy as it is obtained from biomass and therefore it is carbon neutral. To be used as fuel, glycerol has to be converted into a more applicable fuel such as hydrogen.
In the state of the art, the steam reforming, catalytic reforming or pyrolysis processes are the methods most commonly used to convert glycerol into hydrogen. However, most of these processes are endothermic, which means that the reaction will only take place if a sufficient amount of heat is provided. Steam reforming uses several types of catalyst such as Ni/Co and shows good catalytic activity, although they have some limitations due to carbon deposition.
Often, the auto thermal reforming process that combines catalytic partial oxidation and steam reforming is also employed to convert glycerol to syngas without providing heat. The utilization of small amounts of oxygen changes the thermodynamic of the reaction from endothermic to exothermic. However, this type of process must use noble metal to activate the reforming reaction which results in better performances and where the principal limitation is the high costs. One of the main problems for the catalysts used for steam auto-thermal reforming is that the high sulphur content in the biomass causes their deactivation. In fact, metal catalysts like nickel chemically adsorb the sulphur compounds on their surface (Ni-S), deactivating the active site of the catalyst. This effect is emphasized when water is present in modest amounts in the gas flow.
Glycerol may have the potential to be used as fuel for fuel cells.
However, fuel cells are limited by their need for pure hydrogen or CO or methane fuel.
Hence, an improved fuel cell system that is able to employ oxygenated hydrocarbons as a fuel would be advantageous.
In particular, an improved electrode for catalytic steam reforming would be advantageous, and a more efficient and/or reliable electrode for catalytic steam reforming would be advantageous.

OBJECT OF THE INVENTION

It is an object of the present invention to produce a fuel cell system able to employ oxygenated hydrocarbons as fuel.
It may be seen as an object of the present invention to provide an efficient method for operating a fuel cell system able to efficiently employ oxygenated hydrocarbons as fuel.
It is a further object of the present invention to provide an alternative to current state of the art of reforming fuel cells.

SUMMARY OF THE INVENTION

The above described object and several other objects are intended to be obtained in an aspect of the invention by integrating the reforming catalyst with an electrode of a fuel cell.
Thus, the above described object and several other objects are intended to be obtained in a first aspect of the invention by providing:
An electrode for a catalytic steam reforming fuel cell, the electrode comprising: a metal oxide layer; a catalytic steam reforming layer wherein the catalytic steam reforming layer is integrated into the metal oxide layer by being co-sintered together with the metal oxide layer.
The gist of the invention lays into the production of a steam reforming- fuel cell system in which a catalytic steam reforming layer is directly integrated into a fuel cell device by being co-sintered with the fuel cell anode. The system is thus able to co-generate $H_2$ and electricity from an oxygenated hydrocarbon, such as glycerol, by an electro-catalytic process.

The co-sintering produces an interaction between the layers so that an integrated structure with a defined porosity is achieved.

The co-sintering enhances the cohesion between the reforming layer and the active anode.

The reforming layer may have a double function: may be both a reforming layer and a protecting layer. A protecting layer is meant to protect the active anode from eventual poisoning from, e.g. sulphur. The reforming layer may be composed of NiO catalyst, thus very sensitive to sulphur poisoning. The presence of a protecting layer protects the active anode since the sulphur reacts with the reforming layer blocking the sulphur in its surface.

In some embodiments the reforming layer comprises Nickel. In some other embodiments the reforming layer does not comprise Nickel.

In some further embodiments the reforming layer was manufactured at different gradients of porosity.

In some embodiments the catalytic steam reforming layer comprises a combination of at least two transition metals.

The idea of combining two transition metals at least partially stems from the need of protecting the catalyst from poisoning, e.g. from sulphur poisoning.

In some embodiments a first of the two transition metals may have a higher catalytic activity than a second of the two transition metals. The second of the two transition metals may be more sensitive to poisoning, such as sulphur poisoning, i.e. may have a higher affinity towards poisoning elements, such as sulphur, than the first element. Thus by combining at least two transition metals wherein a first metal has a higher catalytic activity then the second metal and the second metal has a higher affinity towards poisoning elements, such as sulphur, than the first metal provides an improved catalytic reforming layer. The improved catalytic reforming layer has a high catalytic activity and high tolerance to poisoning, such as sulphur poisoning.

The high tolerance is due to the higher affinity of the second metal towards the poisoning element. Thus the second metal gets mostly of the poisoning element, while the first metal having higher catalytic activity provides the high catalytic activity, i.e. the good performances, of the bimetallic catalyst.

Thus, in some embodiments the first of the at least two transition metals has a higher catalytic activity than a second of the at least two transition metals, and the second of the at least two transition metals has an higher affinity towards sulphur than the first of the at least two transition metals.

For example the at least two transition metals may be Mo and Ti, Cu and Ti, Mo and W or Mo and Cu.

One of the advantages of the use of this type of reforming layer is that the electrode is able to tolerate large amounts of sulphur. Thus, the glycerol produced from bio-mass that often containing large amount of sulphur can be used as fuel.

In some further embodiments, the catalytic steam reforming layer further comprises a doped metal oxide. For example the doped metal oxide may be a lanthanide doped metal oxide, such as gadolinia doped ceria (GDC).

Thus, the reforming layer may be composed of a combination of two metals, e.g. Mo-Ti, Mo-W, Mo-Cu or Cu-Ti supported by gadolinia doped ceria.

A better cohesion between the two layers is thus obtained by mixing the catalyst with a small percentage of a lanthanide doped metal oxide, such as gadolinia doped ceria (35 v %).

Gadolinia doped ceria (CGO) may be used as a substitute of Yttria Stabilized Zirconia (YSZ) because it is more ionically conductive, which in turn improves its tolerance of the sulphur.

However, in some embodiments YSZ may be also used.

In some further embodiments magnesium oxide, MgO, may substitute YSZ or CGO. In these embodiments the catalytic reforming layer does not comprise a doped metal oxide but a metal oxide that is not doped, i.e. MgO. MgO has the great advantage of having a low cost and good mechanical propriety facilitating the extrusion process.

The invention is particularly, but not exclusively, advantageous for producing an oxygen permeation membrane.

The earlier described object and several other objects are intended to be obtained in a second aspect of the invention by providing an oxygen permeation membrane comprising an electrode according to the first aspect of the invention.

In a third aspect of the invention a catalytic steam reforming fuel cell comprising: a cathode; an electrolyte and an anode electrode according to the first aspect of the invention is provided.

In some embodiments the catalytic steam reforming fuel cell according to the third aspect of the invention is adapted to be fed by a hydrocarbon, such as an oxygenated hydrocarbon originated from biomass, thus also referred to as an oxygenated biomass, such as glycerol or propanol.

The catalytic steam reforming fuel cell may be configured to input hydrocarbon, such as an oxygenated hydrocarbon.

The oxygenated hydrocarbon may be glycerol, e.g. in its liquid form.

The oxygenated hydrocarbon may be glycerol containing sulphur impurities.

In some embodiments according to the third aspect of the invention, the cathode comprises a mixture of mixed ionic conductors and GDC or MgO.

In some further embodiments the electrolyte of the catalytic steam reforming fuel cell according to the third aspect comprises GDC.

The catalytic steam reforming fuel cell according to the third aspect of the invention may have a tubular geometry.

Thus, the invention relates also to a system having a specific geometry, e.g. a tubular geometry, having the advantage of increasing the surface area.

The tubular geometry of the whole cell can be also used as a fluid bed reactor in which the catalyst is immobilized in the wall of the reactor and the flow passes through it. Furthermore, the tubular geometry enhances the heat and mass transport.

The glycerol is purged in the fuel cell system using an injection system which injects a given amount of aerosol composed of water and glycerol, at a given interval of time. The aerosol is formed in such a way that it increases the surface area of contact between the fuel and the reforming layer. The surface contact is also enhanced by the type of flow which has both a radial and an axial component to the tubular system. This type of injection makes the fuel distribution homogeneous along the length of the whole cell.

In some further embodiments the fuel cell may have a planar geometry.

In a fourth aspect of the invention, a fuel cell stack adapted to convert glycerol into hydrogen gas and electricity, wherein the fuel cell stack comprises catalytic steam reforming fuel cells according to the third aspect of the invention, is provided.

Operation of the fuel cell stack or fuel cell may be tuned, for example by changing the potential or the electrical current applied so to provide partial or full oxidation of the glycerol, thus producing either only electricity or electricity and products such as hydrogen gas, i.e. $H_2$ and carbon monoxide, i.e. CO.

In a fifth aspect, a method of operating the catalytic steam reforming fuel cell according to the third aspect of the invention by controlling the injection of oxygenated hydrocarbon into the catalytic steam reforming fuel cell, is provided.

In some embodiments, the control is achieved by pulsed injection of a mixture of water steam and hydrocarbons, such as oxygenated hydrocarbons.

The invention also relates to a method of operating the system where the control of the injection, e.g. by employing a pulsed injection, with the advantage of regenerating the catalytic reforming layer without the need of shutting down the system.

The fuel injection may be not continuous and may be pulsed. The injection may be controlled by an analogic - digital interface. This allows the control of the regeneration of the catalyst by the oxidation of sulphur or carbon deposition on the catalyst.

The specific geometry in combination with the control of the injection largely improves the versatility of the system.

In a sixth aspect a method of producing the electrode for a catalytic steam reforming fuel cell according to the first aspect of the invention by tape casting techniques is provided.

In some embodiments the electrode for a catalytic steam reforming fuel cell according to the first aspect of the invention is produced by extrusions techniques.

The first, second, third and other aspects or embodiments of the present invention may each be combined with any of the other aspects and embodiments. These and other aspects or embodiments of the invention will be apparent from and elucidated with reference to the embodiments described hereinafter.

BRIEF DESCRIPTION OF THE FIGURES

The electrode, oxygen membrane, fuel cell, stack of the fuel cells and a method to operate the fuel cell according to some aspect of the invention will now be described in more detail with regard to the accompanying figures. The figures show one way of implementing the present invention and is not to be construed as being limiting to other possible embodiments falling within the scope of the attached claim set.

Figure 1 is a schematic representation of oxidation area of an electrode according to some embodiments of the invention and the mechanism of the reaction.

Figure 2 is a Scanning Electro Microscopy (SEM) image showing an oxygen membrane cell consisting in an anode and an electrolyte supported by a reforming layer catalyst composed of NiO-YSZ that is 200 $\mu$m thick.

Figure 3 is a SEM image showing the structure of the GDC electrolyte of the oxygen membrane cell of figure 1.

Figure 4 is a SEM image of another example of an electrode, according to some embodiments of the invention, where the active anode is composed of NiO YSZ and the reforming layer is GDC.

Figure 5 is a schematic representation of preparation of the reforming fuel cell by co-casting.

Figure 6 is a schematic representation of a fuel cell having tubular geometry according to some embodiments of the invention.

Figure 7 is a schematic representation of an integrated steam reforming solid oxide fuel cell according to some embodiments of the invention.

Figure 8 is a schematic representation of an injection system according to some embodiments of the invention.

DETAILED DESCRIPTION OF AN EMBODIMENT

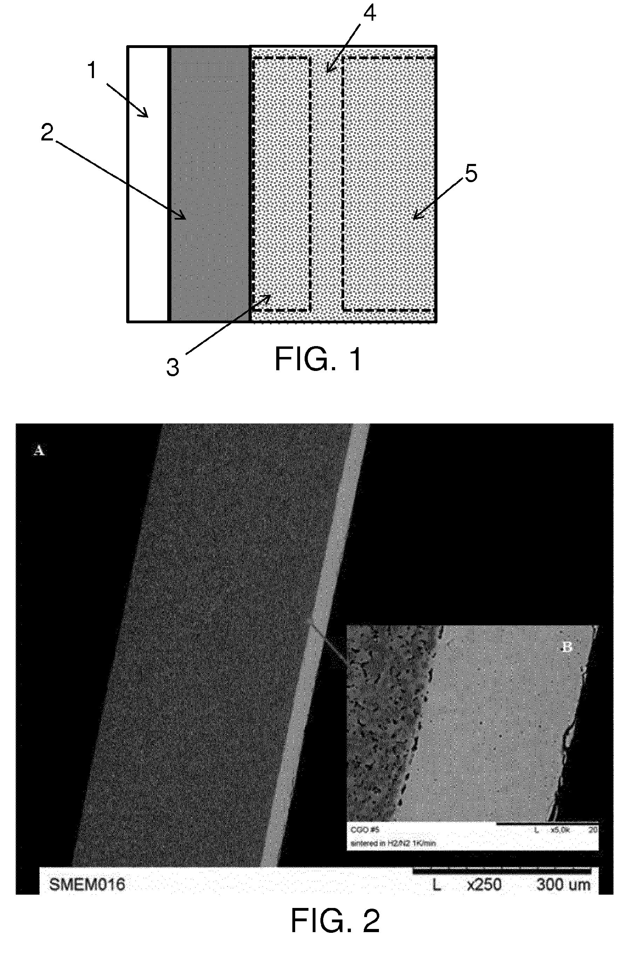

Figure 1 is a schematic representation of oxidation area and the mechanism of the reaction.

Figure 1 shows the oxygen membrane 1, the active anode 2 and the reforming layer 4. In the reforming layer 4 two zones are identified, the oxidation reaction zone 3 and the reforming reaction zone 5.

This identification is merely an indication of the potential areas of reaction and is not meant as a limitation of the system structure. In the oxidation reaction zone 3, the oxidation reaction occurs as indicated below:

$$H_2 + C_2H_4 + CH_4 + CO + C_3H_6 + C_2H_2O + O^{2-} \rightarrow H_2 + CO + CO_2$$

In the reforming reaction zone 5, the reforming reaction occurs as indicated below:

$$C_3H_8O + H_2O \rightarrow H_2 + C_2H_4 + CH_4 + CO + C_3H_6 + C_2H_2O$$

In general the integration of a steam reforming layer in a fuel cell changes the reforming process from endothermic to exothermic. The transformation of the nature of the process is caused by the introduction of the partial oxidation of the reaction:

$$C_3H_5(OH)_3 + \frac{1}{4}H_2O + \frac{1}{8}O_2 \rightarrow 7H_2 + 2CO + CO_2 \qquad \text{eq.1;}$$

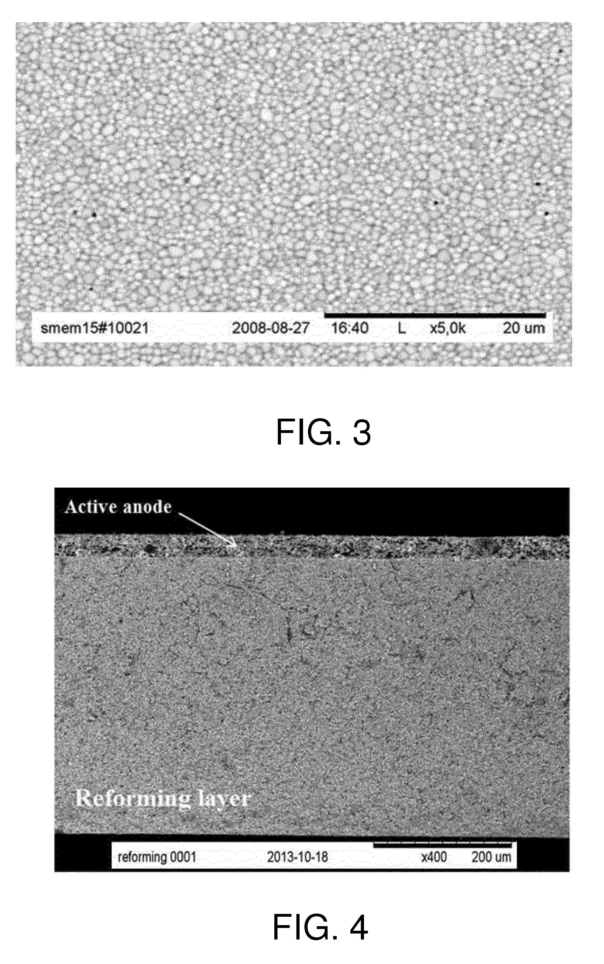

having a $\Delta H_0$ of 240 Kj/mol and that takes place between the reforming layer and the active anode, as shown in figure 4.

By varying the oxygen flux the thermodynamic of the reaction can be adjusted so as to varying the outcome of the reaction, e.g. produce only electricity, only chemical products or a combination of the two.

In order to satisfy the chemical reaction of eq. 1, a precise amount of oxygen gas has to be pumped from the cathode to the active layer, passing through the electrolyte. The flow of oxygen can be regulated by the variation of the oxygen partial pressure in the cathode side, the operating temperature and / or the thickness of the oxygen membrane present in the fuel cell. The amount of oxygen chosen depends on the type of the reaction desired at the anode and consequently, whether or not we intend to partially or totally oxidise the glycerol. The diffusion of oxygen to the active anode is driven by the cathode performance and membrane.

The reforming layer is able to reform the glycerol in the small molecules such as $CH_4$, $C_2H_4$ and $C_2H_6$. However, the reforming layer must also be able to tolerate a large amount of sulphur that is often contained in the fuel produced by biomass, such as glycerol.

In some examples the reforming layer comprises Nickel. In some other examples Nickel was substituted with metals that have a great resistance to high sulphur content such as Ti, Mo, W and Cu.

In some other examples YSZ is used in combination with NiO.

In some further example gadolinia doped ceria may substitute YSZ as it is more ionically conductive, which improves its tolerance of the sulphur.

**Examples of electrodes or oxygen membranes**

An electrode or oxygen membrane of ceria doped gadolinia was co-sintered with an active anode and a reforming layer that supports the oxygen membrane cell. The sintering temperature was 1315°C for 12 hr.

The sintering of the membrane with the anode and the reforming layer was investigated by scanning electrons microscopy providing information on the junction between the different layers as shown by the figure 2.

Figure 2A shows an oxygen membrane cell consisting of an anode and a GDC electrolyte supported by a reforming layer catalyst composed of NiO-YSZ 200 $\mu$m thick. In figure 2B a detail of the interface between anode and the GDC electrolyte is shown.

Figure 2A shows the structure of the reforming layer and of the active anode when co-sintered according to some embodiments of the invention. It can be clearly seen that no separation between the two layers may be noticed as the two layers are fully sintered together.

Figure 2B shows the interface between the GDC electrolyte and the active anode/reforming layer compose of NiO-YSZ.

Figure 3 is a SEM image showing an investigation of the GDC electrolyte after the sintering. The GDC oxygen membrane shows a dense structure. The particles are perfectly joined one to the other forming a dense structure that is typical for every oxygen membrane.

Figure 4 is another example of an electrode according to some embodiments of the invention where the active anode is composed of NiO YSZ and the reforming layer is GDC.

Figure 4 shows the junction between an active anode composed of NiO YSZ and a GDC reforming layer. Figure 3 shows the whole structure composed of active anode and reforming layer without the presence of an electrolyte.

Also in this case the co-sintering of active anode and the reforming layer occurred at 1315°C for 12 hrs.

The SEM image of figure 4 shows that the active anode and the reforming layer are perfectly joined even if the two layers have a different composition. The thickness of reforming layer is around 300 $\mu$m whereas the one of the active anode is around 60 $\mu$m.

**Reforming device tests - Gas Chromatography investigation.**

An oxygen membrane cell reforming layer supported according to some embodiments of the invention was tested at different temperature keeping constant the ratio between water and glycerol.

The reforming layer was composed of NiO-YSZ and impregnated with 2% in weight of ceria.

Glycerol and water were mixed and the line was warmed up to 120°C. The mixture was flown in the ceramic cell house in which the cell was placed. The mixture passed through a ceramic tube in which the temperature gradient increases along the tube from to 80°C to 680°C - 720°C depending on the setting temperature of the furnace. The gradient was helpful to vaporize slowly the mixture water-glycerol, the vaporized mixture was transported to the cell using a carrier gas composed of 9% hydrogen gas in 91 % of nitrogen gas. The gases at the outlet were tested by Gas Chromatography (GC). The GC used two different columns. The first column was a molecular sieves column whereas the second column was a polymeric column to separate $CO_2$ and $H_2S$. The detector used was a thermal conductive detector (TCD).

The mixture flow was 300 ml/h.

Table 1 shows data related to the membrane with reforming layer composed of NiO -YSZ impregnated, i.e. GC analysis carried out with a glycerol with steam in ratios (S/C) equal to 2.

Table 1.

| Temperature (°C) | $H_2$ | CO | $CO_2$ | $H_2O$ |
|---|---|---|---|---|
| 750 | 53% | 16% | 12% | 18% |
| 700 | 68% | 18% | 10% | 4% |

The glycerol conversion is equal to 100% both a 750°C and 700°C.

This confirms that the effect of the reforming layer combined with the oxygen membrane facilitates the conversion according to eq.1.

In addition, it may be noticed that the oxidation is complete because no methane or methane components such $C_2H_4$ ,$C_2H_2$, $C_2H_4O$, $C_2H_6O$ were observed by GC analysis.

The variation on CO and the strong variation of the percentage of water are due to the oxidation reaction. The membrane at high temperature is more conductive than at low temperature. This means that at high temperature the amount of oxygen at the anode surface is higher than at low temperature and that the oxygen oxidizes part of the $H_2$ and CO to $H_2O$ and $CO_2$ respectively.

The reactions involved are:

$$C_3H_5(OH)_3 + \frac{1}{2}H_2O + \frac{1}{2}O_2 \rightarrow 7H_2 + 2CO + CO_2$$

$$CH_4 + H_2O \rightarrow H_2 + CO$$

$$CO + \frac{1}{2}O_2 \rightarrow CO_2$$

$$CO + H_2O \rightarrow H_2 + CO_2$$

$$CH_4 + CO_2 \rightarrow 2H_2 + 2CO$$

$$CH_4 + O_2 \rightarrow H_2 + CO_2$$

The amount of oxygen gas can be controlled by temperature, by the current applied to the cell or by changing the oxygen partial pressure at the cathode side. In conclusion, this integrated structure has demonstrated that glycerol can be reformed into syngas and that all the glycerol that is not reformed is oxidized.

**Manufacturing process for the reforming and fuel cell / oxygen membrane device**

In a reforming and fuel cell / oxygen membrane device according to some embodiments of the invention, the reforming layer is the structural support component for the fuel cell/ oxygen membrane cell with a thickness of 0.3 to 1 mm to supply sufficient mechanical strength to the device. Additional functional layers may be built up on the reforming support layer resulting in a multi-layer structure that comprises a supporting reforming layer, an active anode, a dense electrolyte and a cathode.
Different designs or geometries and manufacturing methods may be used to prepare a multi-layer device according to some embodiments of the invention.

*Planar geometry:*

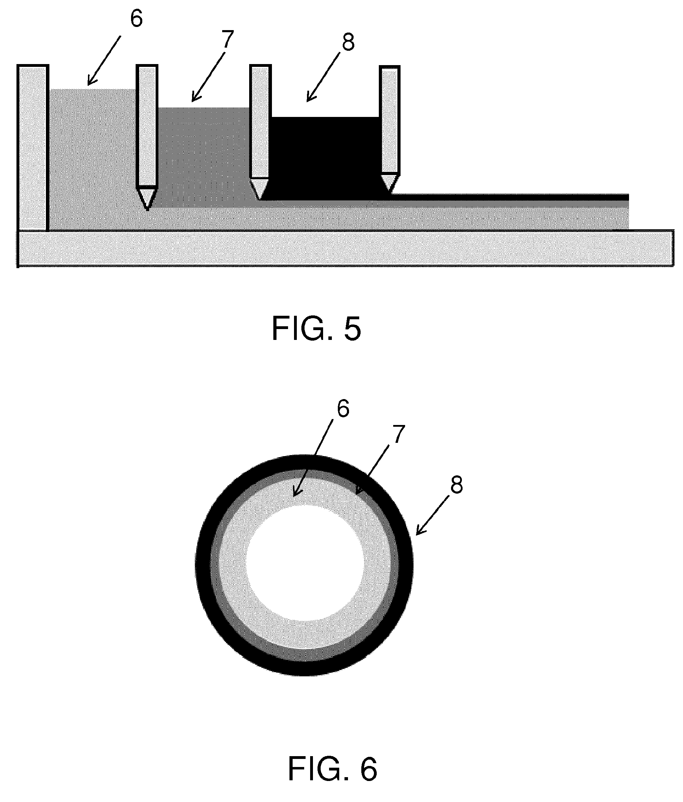

Tape casting is one of the preferred routes to prepare planar reforming layer and active layers. The different components can for example be casted separately and afterwards joined by a lamination or warm pressing step (combination of heat pressure treatment). In a further step the multilayer obtained is co-sintered at elevated temperatures to consolidate the desired structure. Alternatively, the device can be co-casted during 1st step. This is a process in which reforming 6, active anode 7 and the oxygen membrane/electrolyte 8 layers are casted simultaneously using several blades and producing a multi-layers tape in which each layer has specific characteristics as showing in figure 5.
An air electrode may be then deposited by screen printing or spraying, followed by a second heat treatment, usually at a sintering temperature that is lower by 100 to 300 °C than the co-sintering temperature for the multi-layer. Finally, a slurry or solution based on ceria and containing the active reforming catalysts is impregnated or sprayed into the porous reforming layer followed by a low temperature heat treatment of 500 to 700 °C.

*Tubular geometry:*

The processing procedure for the manufacturing of a tubular device is conceptually similar to the planar but it uses extrusion for shaping of the supporting reforming layer instead of tape casting.
The other components are sequentially coated to the external part of the reforming tube. Preferably, slurry dip coating technique is used to build up the multi-layer tubular structure with inside coatings, as in figure 6. The anode and electrolyte can alternatively be applied to the outside of the tube. The firing steps are analogous to the planar design route. The application of the catalysts into the reforming layer and of the air electrode (cathode) can also be done by dip coating.

*Microtubular geometry:*

Another design is the use of microtubes to increase the active area. The microtubular support structure can be prepared by spinning or electrospining of microfibers of the reforming layer. The microfibers are than coated with the active layers by dip coating (eventually in combination with sol-gel processes). Coating and firing sequences are analogous to tubular design.

*Alternative manufacturing routes:*

Alternative routes for preparation of the base multi-layer structure both in planar or tubular design are: 1) pressing or roll pressing or similar methods to produce thin ceramic sheets of the reforming layer, deposition of active anode and electrolyte by screen printing or spraying, followed by co-sintering. 2) The active layers (anode and electrolyte) could also be deposited on a fully sintered (or pre-sintered) structure of the reforming layer by other (physical) coating methods, such as thermal spraying, CVD, PVD.

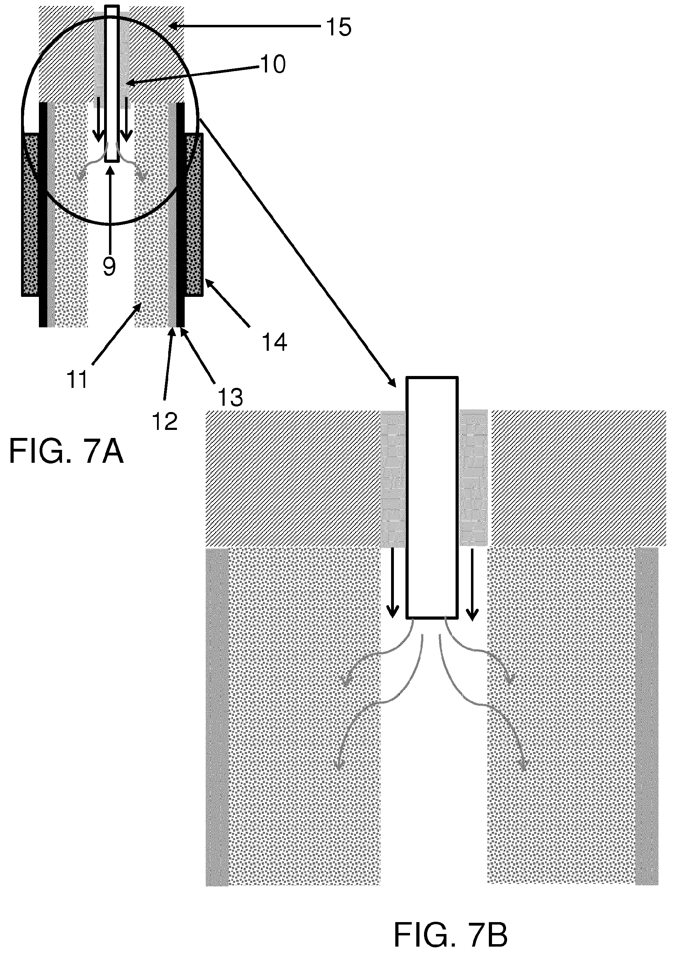

Figure 7 is a schematic representation of an integrated steam reforming solid oxide fuel cell in a tubular geometry.

Figure 7 shows the injection flow of steam and glycerol. Figure 7A shows the glycerol injection 9, the steam injection 10, the reforming layer 11, the active anode 12, the Oxygen membrane /electrolyte 13, a cathode 14 and a sealing 15. Figure 7B shows a magnification of figure 7A.

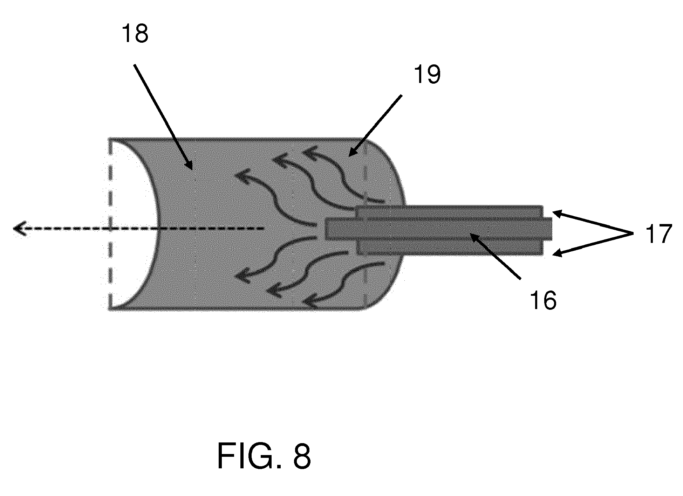

Figure 8 is a schematic representation of a glycerol injection system used to feed the fuel cell showing the injection flow of steam and glycerol. Figure 8 shows the glycerol injection 16, the steam injection 17, a section of a tubular device 18 and the radial flow 19 of mixture steam/glycerol.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. An electrode for a catalytic steam reforming fuel cell, said electrode comprising:

    a metal oxide layer;
    a catalytic steam reforming layer wherein said catalytic steam reforming layer is integrated into said metal oxide layer by being co-sintered together within said metal oxide layer.

2. An electrode for a catalytic steam reforming fuel cell according to claim 1, wherein said catalytic steam reforming layer comprises a combination of at least two transition metals.

3. An electrode for a catalytic steam reforming fuel cell according to claim 2 wherein a first of said at least two transition metals has a higher catalytic activity than a second of said at least two transition metals, and said second of said at least two transition metals has an higher affinity towards sulphur than said first of said at least two transition metals.

4. An electrode for a catalytic steam reforming fuel cell according to any of the preceding claims wherein said at least two transition metals are Mo and Ti, Mo and W, Cu and Ti or Mo and Cu.

5. An electrode for a catalytic steam reforming fuel cell according to any of the preceding claims, wherein said catalytic steam reforming layer further comprises a lanthanide doped metal oxide.

6. An electrode for a catalytic steam reforming fuel cell according to any of the claims, wherein said lanthanide doped metal oxide is gadolinia doped ceria (GDC).

7. An oxygen permeation membrane comprising an electrode according to any of the preceding claims.

8. A catalytic steam reforming fuel cell comprising:

    a cathode;
    an electrolyte;
    an anode electrode according to any of the preceding claims 1-7.

9. A catalytic steam reforming fuel cell according to claim 8, wherein said fuel cell is adapted to be fed by a hydrocarbon, such as an oxygenated hydrocarbon.

10. A catalytic steam reforming fuel cell according to any of the claims 8-9, wherein said fuel cell is configured to input hydrocarbon, such as an oxygenated hydrocarbon.

11. A catalytic steam reforming fuel cell according to any of the claims 8-10, wherein said cathode comprises a mixture of mixed ionic conductors and GDC.

12. A catalytic steam reforming fuel cell according to any of the claims 8-11, wherein said fuel cell has a tubular geometry.

13. A catalytic steam reforming fuel cell according to any of the claims 8-11, wherein said fuel cell has a planar geometry.

14. A fuel cell stack adapted to convert glycerol into hydrogen gas and electricity, said fuel cell stack comprising catalytic steam reforming fuel cells according to any of the preceding claims 8-13.

15. A method of operating said catalytic steam reforming fuel cell according to any of the claims 8-13 by controlling the injection of oxygenated hydrocarbon into said catalytic steam reforming fuel cell and wherein said control is achieved by pulsed injection of a mixture of water steam and hydrocarbons, such as oxygenated hydrocarbons.

FIG. 1

FIG. 2

smem15#10021    2008-08-27    16:40    L    x5,0k    20 um

## FIG. 3

Active anode

Reforming layer

reforming 0001    2013-10-18    x400    200 um

## FIG. 4

FIG. 5

FIG. 6

FIG. 7A

FIG. 7B

FIG. 8

Europäisches
Patentamt

European
Patent Office

Office européen
des brevets

# EUROPEAN SEARCH REPORT

Application Number

EP 13 19 1273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/121999 A1 (LAURENCIN JEOME [FR] ET AL) 17 May 2012 (2012-05-17) | 1-3, 5-11,13, 14 | INV. H01M8/06 H01M4/90 |
| Y | * paragraphs [0106] - [0198]; figures 1-7 * | 15 | |
| X | US 2009/023050 A1 (FINNERTY CAINE [US] ET AL) 22 January 2009 (2009-01-22) * paragraphs [0003], [0038] - [0048] * | 1-4, 7-10, 12-14 | |
| X | WO 2011/131657 A1 (PROTIA AS [NO]; KJOELSETH CHRISTIAN [NO]; FJELD HARALD [NO]; VESTRE PE) 27 October 2011 (2011-10-27) * page 7, line 17 - page 16, line 26; figures 6,7 * | 1,7-10, 13,14 | |
| X | US 2011/039183 A1 (ARMSTRONG TAD [US] ET AL) 17 February 2011 (2011-02-17) * paragraphs [0014] - [0044]; figure 1 * | 1-3,5-14 | |
| X | US 2008/241611 A1 (YOON SUNG PIL [KR] ET AL) 2 October 2008 (2008-10-02) * paragraphs [0028] - [0039]; figure 1 * | 1,7-10, 13,14 | TECHNICAL FIELDS SEARCHED (IPC) H01M |
| Y | WO 01/76731 A1 (HYDROGEN BURNER TECHN INC [US]) 18 October 2001 (2001-10-18) * claim 1 * | 15 | |

The present search report has been drawn up for all claims

| Place of search | Date of completion of the search | Examiner |
|---|---|---|
| Munich | 28 February 2014 | Brune, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 1273

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2014

| Patent document cited in search report | Publication date | Patent family member(s) | Publication date |
|---|---|---|---|
| US 2012121999 A1 | 17-05-2012 | CN 102460793 A | 16-05-2012 |
| | | DK 2430693 T3 | 24-06-2013 |
| | | EP 2430693 A1 | 21-03-2012 |
| | | ES 2415356 T3 | 25-07-2013 |
| | | FR 2945378 A1 | 12-11-2010 |
| | | JP 2012527068 A | 01-11-2012 |
| | | US 2012121999 A1 | 17-05-2012 |
| | | WO 2010130692 A1 | 18-11-2010 |
| US 2009023050 A1 | 22-01-2009 | AU 2008279690 A1 | 29-01-2009 |
| | | CA 2694019 A1 | 29-01-2009 |
| | | CN 101803097 A | 11-08-2010 |
| | | EP 2208250 A1 | 21-07-2010 |
| | | JP 5396386 B2 | 22-01-2014 |
| | | JP 2010533957 A | 28-10-2010 |
| | | KR 20100057619 A | 31-05-2010 |
| | | RU 2010106177 A | 27-08-2011 |
| | | US 2009023050 A1 | 22-01-2009 |
| | | WO 2009014645 A1 | 29-01-2009 |
| WO 2011131657 A1 | 27-10-2011 | NONE | |
| US 2011039183 A1 | 17-02-2011 | TW 201117461 A | 16-05-2011 |
| | | US 2011039183 A1 | 17-02-2011 |
| | | WO 2011019825 A2 | 17-02-2011 |
| US 2008241611 A1 | 02-10-2008 | KR 100803669 B1 | 19-02-2008 |
| | | US 2008241611 A1 | 02-10-2008 |
| WO 0176731 A1 | 18-10-2001 | AU 5133401 A | 23-10-2001 |
| | | US 2001046462 A1 | 29-11-2001 |
| | | WO 0176731 A1 | 18-10-2001 |

EPO FORM P0459

For more details about this annex : see Official Journal of the European Patent Office, No. 12/82